(19) Europäisches Patentamt
European Patent Office
Office européen des brevets

(11) EP 4 686 197 A1

(12) EUROPEAN PATENT APPLICATION

(43) Date of publication:
28.01.2026 Bulletin 2026/05

(21) Application number: 24306226.2

(22) Date of filing: 22.07.2024

(51) International Patent Classification (IPC):
H04N 19/117 (2014.01)    H04N 19/136 (2014.01)
H04N 19/186 (2014.01)    H04N 19/70 (2014.01)

(52) Cooperative Patent Classification (CPC):
H04N 19/186; H04N 19/117; H04N 19/136;
H04N 19/70

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: InterDigital CE Patent Holdings, SAS
75017 Paris (FR)

(72) Inventors:
• DOYEN, Didier
  35510 CESSON-SEVIGNE (FR)
• FRANCOIS, Edouard
  35890 BOURG DES COMPTES (FR)
• CHEN, Ya
  35700 RENNES (FR)
• THIEBAUD, Sylvain
  35530 NOYAL SUR VILAINE (FR)

(74) Representative: Vossius & Partner
Patentanwälte Rechtsanwälte mbB
Siebertstraße 3
81675 München (DE)

(54) **LUMA MAPPING CODEWORD CHROMA SCALING OFFSET**

(57)    Systems and methods related to image encoding and decoding. One example is directed to an image decoder. The image decoder includes an electronic processor configured to receive encoded image data, determine, from the encoded image data, a chroma scaling factor independent of a luma average of the encoded image data and based on a number of codewords related to a forward mapping function of the encoded image data and a chroma offset factor, decode the encoded image data according to the chroma scaling factor to create decoded image data, and output the decoded image data.

FIG. 5

**Description**

FIELD OF THE INVENTION

The present disclosure relates generally to mapping functions for video encoding and decoding. More specifically, examples described herein relate to chroma scaling.

SUMMARY

In video coding, luma mapping with chroma scaling (LMCS) may be utilized in compression and decompression of video image data. Luma mapping is the mapping of input luma code values to a new set of code values for use within the coding (encoding or decoding) loop. Chroma scaling is the determination of chroma residue values. Luma mapping often improves coding efficiency for standard and high dynamic range video signals because it widens the range of luma code values usable at a specified bit depth. Chroma scaling additionally may improve relative compression efficiency for the luma and chroma components of the video signal.

The luma mapping process of LMCS is applied at the pixel sample level and is implemented using a piecewise linear model. The chroma scaling function is applied at the chroma block level and is implemented using a scaling factor, referred to herein as a "chroma scaling factor." Traditionally, a chroma scaling factor is derived from reconstructed neighboring luma samples of the chroma block.

The function for determining the chroma scaling factor requires, for each pixel, first determining a luma value associated with the corresponding pixel to calculate the chroma scaling factor. The luma value is normally evaluated using neighboring decoded luma values (for example, top and/or left pixels) derived according to the luma mapping process to help reduce delay in the chroma calculation. An average of these luma values (e.g., an estimated luma value) is calculated and provides a luminance value used to determine in which piece (e.g., video slice) this estimated luma value is.

Because the chroma scaling function is normally computed from the estimated luma values, such a computation may introduce delay in transmission of data. Thus, example systems and methods described herein are, among other things, directed to a simplification of the chroma scaling factor determination that is independent of an estimated (average) luma calculation.

In some aspects, the techniques described herein relate to an image decoder. The image decoder includes an electronic processor configured to receive encoded image data, determine, from the encoded image data, a chroma scaling factor independent of a luma average of the encoded image data and based on a number of codewords related to a forward mapping function of the encoded image data and a chroma offset factor, decode the encoded image data according to the chroma scaling factor to create decoded image data, and output the decoded image data.

In some aspects, the techniques described herein relate to an image system. The system includes an image encoder configured to perform a luma forward mapping function on image data, producing encoded image data and an image decoder. The image decoder includes an electronic processor configured to receive the encoded image data, determine, from the encoded image data, a chroma scaling factor independent of a luma average of the encoded image data and based on a number of codewords related to the forward mapping function and a chroma offset factor, decode the encoded image data according to the chroma scaling factor, and output the decoded image data.

Other examples, implementations, features, and aspects will become apparent by consideration of the detailed description and accompanying drawings.

BRIEF DESCRIPTION OF THE DRAWINGS

In the accompanying figures similar or the same reference numerals may be repeated to indicate corresponding or analogous elements. These figures, together with the detailed description, below are incorporated in and form part of the specification and serve to further illustrate various embodiments, examples, aspects, and features of concepts that include the claimed subject matter, and to explain various principles and advantages of those embodiments, examples, aspects, and features.

FIG. 1 is a block diagram of a system within which aspects described herein are implemented, in accordance with some implementations.

FIG. 2 is a block diagram of an encoder, in accordance with some implementations.

FIG. 3 is a block diagram of a decoder, in accordance with some implementations.

FIG. 4 is a flow diagram that illustrates a chroma rescaling function implemented at a decoder side, in accordance with prior-art techniques.

FIG. 5 is a flow diagram that illustrates a revised chroma rescaling function implemented at a decoder side, in accordance with various aspects of the present disclosure.

FIG. 6 is a flow chart illustrating parsing of chroma scaling parameters received from an encoder, in accordance with various aspects of the present disclosure.

FIG. 7A is a table illustrating test results of the chroma scaling factor function performed according to the diagram of FIG. 5 compared to the function performed according to the diagram of FIG. 4.

FIG. 7B is a table illustrating test results of the chroma scaling factor function performed according to the diagram of FIG. 5 compared to the function performed according to the diagram of FIG. 4.

Skilled artisans will appreciate that elements in the figures are illustrated for simplicity and clarity and have not necessarily been drawn to scale. For example, the dimensions of some of the elements in the figures may be exaggerated relative to other elements to help improve understanding of the examples, aspects, and features presented in this disclosure.

The system, apparatus, and method components have been represented where appropriate by conventional symbols in the drawings, showing only those specific details that are pertinent to understanding of the various embodiments, examples, aspects, and features of the present disclosure so as not to obscure the disclosure with details that will be readily apparent to those of ordinary skill in the art having the benefit of the description herein.

DETAILED DESCRIPTION

Examples are herein described with reference to flowchart illustrations and/or block diagrams of methods, apparatus (systems) and computer program products. It will be understood that each block of the flowchart illustrations and/or block diagrams, and combinations of blocks in the flowchart illustrations and/or block diagrams, can be implemented by computer program instructions. These computer program instructions may be provided to an electronic processor (sometimes simply "processor") of a general-purpose computer, special purpose computer, or other programmable data processing apparatus to produce a special purpose and unique machine, such that the instructions, which execute via the processor of the computer or other programmable data processing apparatus, create means for implementing the functions/acts specified in the flowchart and/or block diagram block or blocks. The methods and processes set forth herein need not, in some aspects, be performed in the exact sequence as shown and likewise various blocks may be performed in parallel rather than in sequence. Accordingly, the elements of methods and processes are referred to herein as "blocks" rather than "steps."

These computer program instructions may also be stored in a computer-readable memory that can direct a computer or other programmable data processing apparatus to function in a particular manner, such that the instructions stored in the computer-readable memory produce an article of manufacture including instructions which implement the function/act specified in the flowchart and/or block diagram block or blocks.

The computer program instructions may also be loaded onto a computer or other programmable data processing apparatus that may be on or off-premises, or may be accessed via the cloud in any of a software as a service (SaaS), platform as a service (PaaS), or infrastructure as a service (IaaS) architecture so as to cause a series of operational blocks to be performed on the computer or other programmable apparatus to produce a computer implemented process such that the instructions which execute on the computer or other programmable apparatus provide blocks for implementing the functions/acts specified in the flowchart and/or block diagram block or blocks. It is contemplated that any part of any example, feature, aspect, or embodiment discussed in this specification can be implemented or combined with any part of any other example, feature, aspect, or embodiment discussed in this specification.

Further advantages and features consistent with this disclosure will be set forth in the following detailed description, with reference to the figures.

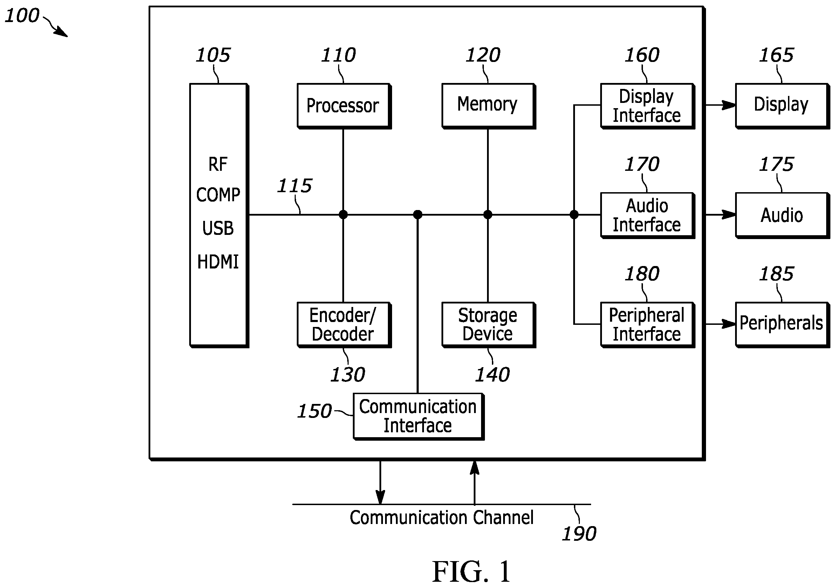

FIG. 1 illustrates a block diagram of an example of a system in which various aspects described herein can be implemented. System 100 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 100, singly or in combination, may be embodied in a single integrated circuit, multiple ICs, and/or discrete components. For example, in at least one example, the processing and encoder/decoder elements of system 100 are distributed across multiple ICs and/or discrete components. In various examples, the system 100 is communicatively coupled to other systems, or to other electronic devices, via, for example, a communications bus or through dedicated input and/or output ports. In various examples, the system 100 is configured to implement one or more of the aspects described herein.

The system 100 includes at least one electronic processor 110 configured to execute instructions loaded therein for implementing, for example, the various aspects described in this application. Electronic processor 110 may include embedded memory, input output interface, and various other circuitries as known in the art. The system 100 includes at least one memory 120 (e.g., a volatile memory, and/or a non-volatile memory). System 100 includes a storage device 140, which may include non-volatile memory and/or volatile memory, including, but not limited to, ROM, PROM, EEPROM, RAM, DRAM, SRAM, flash, magnetic disk drive, and/or optical disk drive. The storage device 140 may include an internal storage device, an attached storage device, and/or a network accessible storage device, as non-limiting examples.

System 100 includes an encoder/decoder 130 configured, for example, to process data to provide an encoded video or decoded video, and the encoder/decoder 130 may include its own processor and memory. The encoder/decoder 130 represents components that may be included in a device to perform the encoding and/or decoding functions. As is known, a device may include one or both of the encoding and decoding components. Additionally, encoder/decoder 130 may be implemented as a separate element of system 100 or may be incorporated within electronic processor 110 as a combination of hardware and software as known to those skilled in the art.

Program code to be executed by processor 110 or encoder/decoder 130 to perform the various aspects described in this application may be stored in storage device 140 and subsequently loaded onto memory 120 for execution by processor 110. In accordance with various aspects, one or more of processor 110, memory 120, storage device 140, and encoder/decoder module 130 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In some instances, memory inside of the electronic processor 110 and/or the encoder/decoder 130 is used to store instructions and to provide working memory for processing that is needed during encoding or decoding. In other instances, however, a memory external to the processing device (for example, the processing device may be either the processor 110 or the encoder/decoder130) is used for one or more of these functions. The external memory may be the memory 120 and/or the storage device 140, for example, a dynamic volatile memory and/or a non-volatile flash memory. In some instances, an external non-volatile flash memory is used to store the operating system of a television. In at least one example, a fast external dynamic volatile memory such as a RAM is used as working memory for video coding and decoding operations, such as for MPEG-2, (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding).

The examples described herein can be carried out by computer software implemented by the processor 110 or by hardware, or by a combination of hardware and software. As a non-limiting example, the examples can be implemented by one or more integrated circuits. The memory 120 can be of any type appropriate to the technical environment and can be implemented using any appropriate data storage technology, such as optical memory devices, magnetic memory devices, semiconductor-based memory devices, fixed memory, and removable memory, as non-limiting examples. The processor 110 can be of any type appropriate to the technical environment, and can encompass one or more of microprocessors, general purpose computers, special purpose computers, and processors based on a multi-core architecture, as non-limiting examples.

The input to the elements of system 100 may be provided through various input devices as indicated in block 105. Such input devices include, but are not limited to, (i) a radio frequency (RF) input terminal that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1, include composite video.

In various embodiments, the input devices of block 105 have associated respective input processing elements. For example, the RF input terminal may be associated with elements suitable for (i) selecting a desired frequency (also referred to as selecting a signal, or band-limiting a signal to a band of frequencies), (ii) down converting the selected signal, (iii) bandlimiting again to a narrower band of frequencies to select (for example) a signal frequency band or channel, (iv) demodulating the down converted and band-limited signal, (v) performing error correction, and (vi) demultiplexing to select the desired stream of data packets. The RF input terminal of various embodiments includes one or more elements to perform these functions, for example, frequency selectors, signal selectors, bandlimiters, channel selectors, filters, downconverters, demodulators, error correctors, and demultiplexers. The RF input terminal may include a tuner that performs various of these functions, including, for example, down converting the received signal to a lower frequency (for example, an intermediate frequency or a near-baseband frequency) or to baseband. In one set-top box embodiment, the RF input terminal and its associated input processing element receives an RF signal transmitted over a wired (for example, cable) medium, and performs frequency selection by filtering, down converting, and filtering again to a desired frequency band. Various examples rearrange the order of the above-described (and other) elements, remove some of these elements, and/or add other elements performing similar or different functions. Adding elements may include inserting elements in between existing elements, for example, inserting amplifiers and an analog- to-digital converter. In various examples, the RF terminal includes or is connected to an antenna.

Additionally, the USB and/or HDMI terminals may include respective interface processors for connecting system 100 to other electronic devices via USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/-decoder 130 operating in combination with the memory and storage elements to process the data stream as necessary for presentation on an output device.

Various elements of system 100 may be provided within an integrated housing, Within the integrated housing, the various elements may be interconnected and transmit data therebetween using suitable connection arrangement 115, for example, an internal bus as known in the art, including the I2C bus, wiring, and printed circuit boards.

The system 100 includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

In some instances, data is streamed to the system 100 using a Wi-Fi network such as IEEE 802.11 network (IEEE refers to the Institute of Electrical and Electronics Engineers). The Wi-Fi signal of these examples is received over the communication channel 190 and the communications interface 150 which are adapted for Wi-Fi communications. The communication channel 190 of these examples is typically connected to an access point or router that provides access to outside networks including the Internet for allowing streaming applications and other over-the-top communications. Other instances provide streamed data to the system 100 using a set-top box that delivers the data over the HDMI connection of the input block 105. Still other examples provide streamed data to the system 100 using the RF connection of the input block 105. As indicated above, various examples provide data in a non-streaming manner. Additionally, various examples use wireless networks other than Wi-Fi, for example a cellular network or a near-field communication network (e.g., a Bluetooth network).

The system 100 may provide an output signal to various output devices, including a display 165, speakers 175, and other peripheral devices 185. The display 165 of various examples includes one or more of, for example, a touchscreen display, an organic light-emitting diode (OLED) display, a curved display, and/or a foldable display. The display 165 can be for a television, a tablet, a laptop, a cell phone (mobile phone), or other device. The display 165 can also be integrated with other components (for example, as in a smart phone), or separate (for example, an external monitor for a laptop).

In various examples, control signals are communicated between the system 100 and the display 165, speakers 175, or other peripheral devices 185 using signaling such as AV.Link, CEC, or other communications protocols that enable device-to-device control with or without user intervention. The output devices may be communicatively coupled to system 100 via dedicated connections through respective interfaces 160, 170, and 180. Alternatively, the output devices may be connected to system 100 using the communication channel 190 via the communications interface 150. The display 165 and speakers 175 may be integrated in a single unit with the other components of system 100 in an electronic device, for example, a television.

The display 165 and speaker 175 may alternatively be separate from one or more of the other components, for example, if the RF input of input 105 is part of a separate set-top box. In various examples in which the display 165 and speakers 175 are external components, the output signal may be provided via dedicated output connections, including, for example, HDMI ports, USB ports, or COMP outputs.

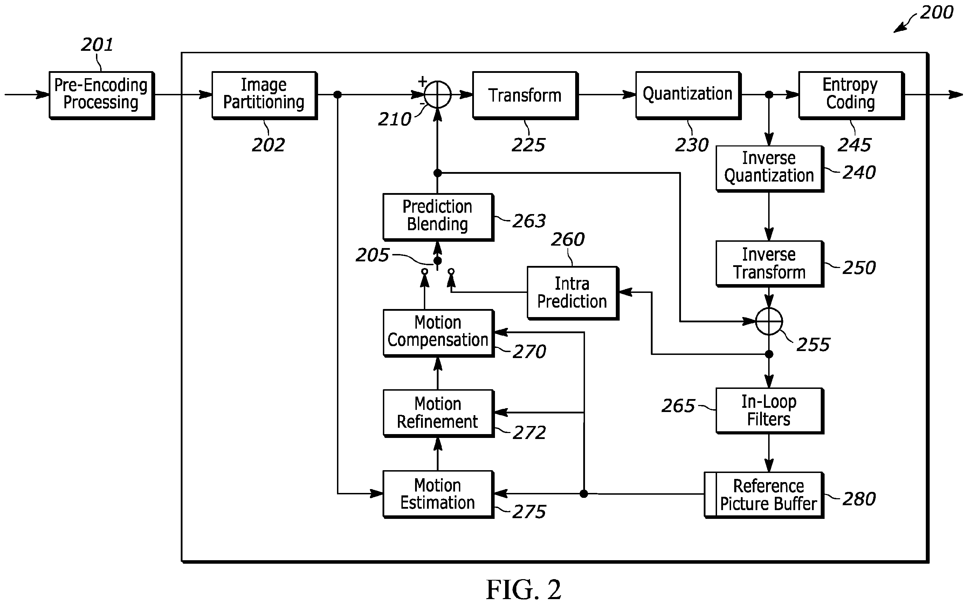

FIG. 2 illustrates an example of a block-based hybrid video encoder 200. Variations of this encoder 200 are contemplated, but the encoder 200 is described below for purposes of clarity without describing all expected variations.

Before being encoded, the video sequence may go through pre-encoding processing (201), for example, applying a color transform to the input color picture (e.g., conversion from RGB 4:4:4 to YCbCr 4:2:0), or performing a remapping of the input picture components to obtain a signal distribution more resilient to compression (for instance using a histogram equalization of color components), or re-sizing the picture (ex: down-scaling). Metadata can be associated with the pre-processing, and attached to the bitstream.

In one example, a picture is encoded via the encoder 200 as described below. The picture to be encoded is partitioned (202) and processed in units of, for example, CUs. Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. The encoder may also blend (263) intra prediction result and inter prediction result, or blend results from different intra/inter prediction methods. Prediction residuals are calculated, for example, by subtracting (210) the predicted block from the original image block.

The motion refinement module (272) uses already available reference picture to refine the motion field of a block without reference to the original block. A motion field for a region can be considered as a collection of motion vectors for all pixels with the region. If the motion vectors are sub-block-based, the motion field can also be represented as the collection of all sub-block motion vectors in the region (all pixels within a sub-block has the same motion vector, and the motion vectors may vary from sub-block to sub-block). If a single motion vector is used for the region, the motion field for the region can also be represented by the single motion vector (same motion vectors for all pixels in the region).

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, e.g., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset) filtering to reduce encoding artifacts. The filtered image is stored at a reference picture buffer (280).

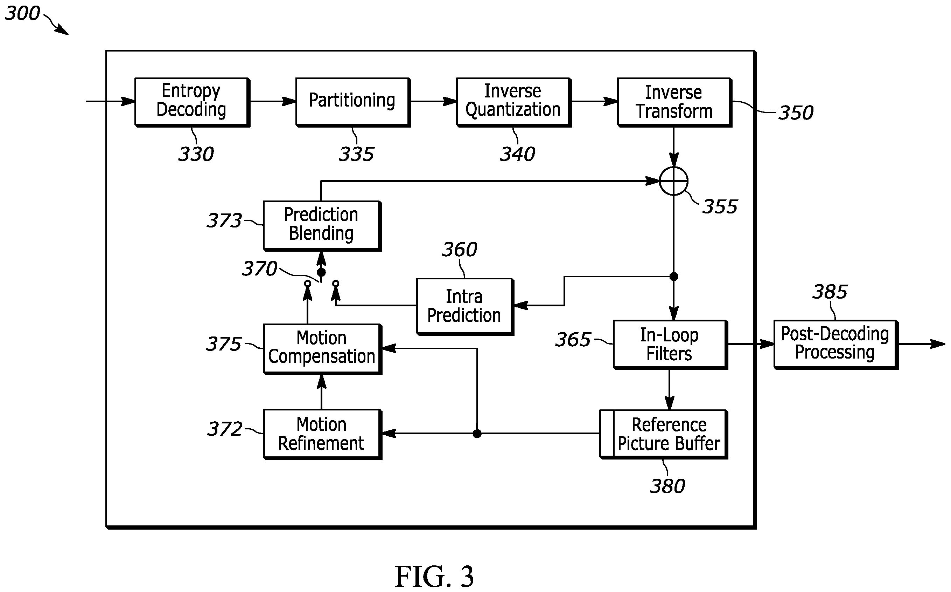

FIG. 3 illustrates a block diagram of a video decoder 300. Video decoder 300 generally performs a decoding pass reciprocal to the encoding pass as described in FIG. 2. The encoder 200 also generally performs video decoding as part of encoding video data. In the example shown, a bitstream is decoded by the decoder 300 as described below.

The input of the decoder includes a video bitstream, which can be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed.

The predicted block can be obtained (370) from intra prediction (360) or motion-compensated prediction (i.e., inter prediction) (375). The decoder may blend (373) the intra prediction result and inter prediction result, or blend results from multiple intra/inter prediction methods. Before motion compensation, the motion field may be refined (372) by using already available reference pictures. In-loop filters (365) are applied to the reconstructed image. The filtered image is stored at a reference picture buffer (380).

The decoded picture can further go through post-decoding processing (385), for example, an inverse color transform (e.g., conversion from YCbCr 4:2:0 to RGB 4:4:4) or an inverse remapping performing the inverse of the remapping process performed in the pre-encoding processing (201), or re-sizing the reconstructed pictures (ex: up-scaling). The post-decoding processing can use metadata derived in the pre-encoding processing and signaled in the bitstream.

**Luma-Dependent Chroma Residual Scaling**

In the examples described herein, various function, variable, and value names are provided. It should be understood of course that the names are examples and that other names could be used for the various functions, variables, and values.

Luma mapping with Chroma scaling (LMCS) includes two aspects: luma mapping (LM), and luma-dependent chroma residual scaling (sometimes abbreviated as CS herein).

As explained in more detail below, luma mapping generally consists of applying a luma forward mapping function to the prediction luma samples. The luma forward mapping function is based on a look up or mapping table coded in the data stream, in which the mapping table indicates the slopes of the piece-wise linear luma mapping function. Each piece or segment is of uniform length, defined for an interval $[Y_i, Y_{i+1}-1]$, i=0 to 15.

Chroma scaling traditionally consists in using a luma-dependent scaling in an encoder (for example, the encoder 200 of FIG. 2) or inverse scaling in a decoder (for example, the decoder 300 of FIG. 3). As also described in more detail below, the inverse scaling factors are derived from a chroma mapping table indexed by index values derived from luma values. The chroma mapping table is derived from the luma mapping table and can be approximated as the inverse of the luma value for the interval $[Y_i, Y_{i+1}-1]$, i=0 to 15. The scaling factors at the encoder side are the inverse of the inverse scaling factors used at the decoder.

In many image sequences, the data range of the luma does not correspond to 1024 levels as expected for a 10-bit signal. Rather, the luma typically corresponds to a limited range of 64 - 940 levels (also referred to as standard range). The LMCS function may enable modification of the luma of the image content to better exploit the 10-bit capabilities. As described above, a mapping function is applied to luma based on a pre-calculated look up table (LUT), computed at the encoder. Values of the LUT are defined by the encoder based on specific characteristic of the image content. For this purpose, the 10-bit representation (1024 levels) is split into 16 pieces (intervals) of 64 levels. A detailed example of the LMCS mapping function derivation on the encoder side is provided below.

For a given image sequence, some parameters are extracted (for example, on I-frames such as the histogram and the local variance of the frame per pieces). As described above, the result of the sample histogram is given with 16 values (corresponding to the 16 pieces), each corresponding to 1/16 of the range of values between 0 and 1023 for a 10 bits signal. Hist[0] is corresponding to the occurrence of samples having a luma between 0 and 63 on the whole picture, Hist[1] the occurrence of sample having a luma between 64 and 127 and so on. Hist[i] for i=0 to 15 are normalized so that Hist[0] + ... + Hist[15] = 1.0.

In one example, the variance of the sample P having the value of luma P(x,y) is calculated as the sum of square value of pixel on a 5*5 window divided by the size of the window minus the square of the average value on this window. This variance is summed with variances of the same piece, the piece is determined by the luma value of the current sample.

If Hist[0] and Hist[15] are both below a threshold (e.g., 0.001), the LCMS function is activated, meaning that the codewords (CWs) from 0-63 and 960-1023 are not currently used for coding the particular sequence.

896 codes were used to code values between 64 and 959. The new Number of Code Words (NbCW) can be between 896 and 1022 to encode these 896 values between 64 and 959. At this stage NbCW is always a multiple of 14. NbCW is determined based on different thresholds calculated from histogram and variance values.

At the previous step, the number of CW per piece is the same (NbCW is a multiple of 14). The refinement process uses the histogram and the variance value of each piece to slightly modified the number of CW per piece around the initial value calculated at the previous step. This corresponds to the following pseudo-code:

```
for (int i = 0; i < 16; i++)   {

    if (Hist[i] > 0.001)   {

        if (Hist[i] > 0.4) hist = 0.4

        else hist = Hist[i]

        delta1 = (uint16_t)(10.0 * hist + 0.5);

        delta2 = (uint16_t)(20.0 * hist + 0.5);

        if (normVar[i] < 0.8) {

        m_binCW[i] = m_binCW[i] + delta2;

            }

        else if (normVar[i] < 0.9){

            m_binCW[i] = m_binCW[i] + delta1;

            }

        if (normVar[i] > 1.2){
```

$$m\_binCW[i] = m\_binCW[i] - delta2;$$

$$\}$$

$$else\ if\ (normVar[i] > 1.1)\ \{$$

$$m\_binCW[i] = m\_binCW[i] - delta1;$$

$$\}$$

$$\}$$

A correction step is applied to ensure the sum of number of CW per piece is not above 1023.

A particular processing function is applied for quantization parameters (QP) less than or equal to 22 to determine whether the NbCW is modified or not. If the NbCW is modified, the value is set to 924.

The LUT corresponding to the number of CW per piece is generated (referred to below as the Forward Mapping LUT) and is used each time a conversion from the non-mapped to the mapped domain is required. In parallel, an Inverse_Mapping LUT is also generated based on the same number of CW per pieces. The Inverse_Mapping LUT is used each time a conversion from the mapped to the non-mapped domain is required. The Forward_Mapping and Inverse_Mapping are applied to the video for any other frames than I-frames.

The following LMCS parameters are signaled by the encoder in, for example, an adaptation parameter set (APS).

**Table 1. LMCS syntax table.**

| lmcs_data( ) { | Descriptor |
|---|---|
| **lmcs_min_bin_idx** | ue(v) |
| **lmcs_delta_max_bin_idx** | ue(v) |
| **lmcs_delta_cw_prec_minus1** | ue(v) |
| for( i = lmcs_min_bin_idx; i <= LmcsMaxBinIdx; i++ ) i | |
| **lmcs_delta_abs_cw**[ i ] | u(v) |
| if( lmcs_delta_abs_cw[ i ] > 0 ) | |
| **lmcs_delta_sign_cw_flag**[ i ] | u(1) |
| } | |
| if( aps_chroma_present_flag ) i | |
| **lmcs_delta_abs_crs** | u(3) |
| if( lmcs_delta_abs_crs > 0 ) | |
| **lmcs_delta_sign_crs_flag** | u(1) |
| } | |
| } | |

The decoder decodes this information, rebuilds the forward and inverse mapping functions, and uses these functions during the decoding process (forward mapping is applied to inter prediction samples, and inverse mapping is applied after the reconstruction process and before the in-loop filtering). The syntax in VVC (Versatile Video Coding), for example, allows computing and signaling LMCS parameters for any frame. In practice, in the Versatile Video Coding Test Model (VTM) implementation, LMCS parameters are computed by the encoder and signaled LMCS only for I-frames.

**Chroma Scaling of LMCS (Luma Mapping with Chroma Scaling)**

The luma mapping of the LMCS function increases both the data rate and the Peak Signal to Noise Ratio (PSNR) of the luminance leading to an improved Bjontegaard Delta rate (BD-rate) at the end. However, the chroma BD-rate is calculated with the global data rate of luma and chroma. Since with LMCS the data rate is increased, the chroma BD-rate is decreased since no operation is applied on the chroma itself. To compensate this effect, a chroma scaling factor is applied to all chroma residue sample values in a chroma coding block.

A forward scaling factor, ChromaScaleCoeff[i], is applied at the encoder as follows:

**Equation 1:**
$$C\_ResScale = C\_Res * ChromaScaleCoeff[i] = C\_Res/ChromaInvScaleCoeff[i]$$

A corresponding inverse scaling factor ChromaInvScaleCoeff[i] is applied at the decoder as follows:

**Equation 2:**
$$C\_Res = C\_ResScale/ChromaScaleCoeff[i] = C\_ResScale * ChromaInvScaleCoeff[i]$$

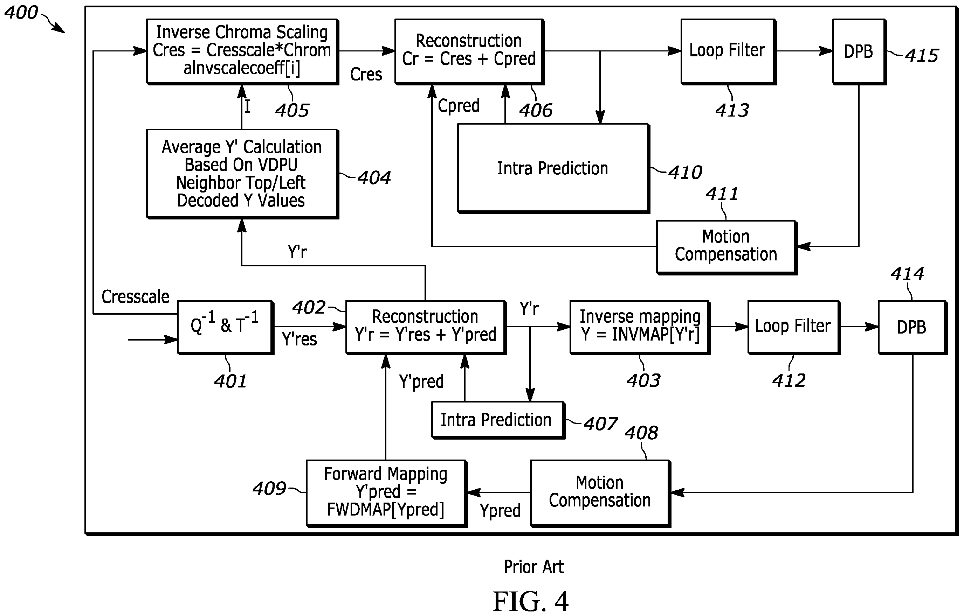

FIG. 4 illustrates a decoding architecture flowchart 400 including the chroma rescaling function described above in accordance with prior-art techniques. From the dequantization and the inverse transform applied to the bitstream (401), a chroma residual (Crescale) and a luma residual (Y'res) are calculated. The chroma residual Crescale has previously been scaled at the encoder side (i.e., chroma scaling of the LMCS function at the encoder 200) and the luma residual Y'res has been previously mapped at the encoder side (forward mapping applied by the LMCS function at the encoder).

The decoding architecture 400 includes the following luma decoding loop: the luma residual Y'res is added to a luma prediction (Y'pred) to get reconstructed values of luma in the mapped domain (Y') (402). An inverse mapping is applied to get the non-mapped luma value (Y) (403), which is first filtered in the loop filter (412) and then stored in the decoded picture buffer (DPB) (414). The luma prediction Y'pred is generated from either of the intra prediction block (407) or the inter prediction that involves motion compensation (408) followed by forward luma mapping (409).

The chroma residual Cresscale is the scaled value of the chroma residual (405). An inverse chroma scaling factor chromaInvscalecoeff[i] is applied to recover the initial chroma residual. The inverse chroma scaling factor chromaInvscalecoeff[i] is not a fixed value and is dependent on the estimated index value i of the piece of the luma pixel. To reduce delay in processing, the value of the estimated index value i is estimated using neighboring, already decoded luma values. The neighboring, already decoded luma values are averaged (avgY) to estimate in which piece the current luma pixel is (404). The inverse chroma scaling factor ChromaInvscalecoeff[i] is determined based on the estimated index value (i).

The value of the inverse chroma scaling factor ChromaInvScaleCoeff[i] is constant for any luma value belonging to the ith luma mapping piece and is determined according to the following:

**Equation 3:**
$$ChromaInvScaleCoeff[i] = OrgCW * (1 << 11)/(lmcsCW[i] + lmcsDeltaCrs)$$

It is determined from the number of CWs in each piece (lmcsCW[i]) and a chroma scaling offset value (lmcsDeltaCRS) that are signaled in the LMCS APS. OrgCW is the original number of CWs per piece (i.e. 64 for 10 bits).

The scaled chroma residual (Cres) is added to the chroma prediction Cpred to determine reconstructed chroma samples (Cr) (406). The chroma prediction Cpred is the result of the intra prediction block (410) or the inter prediction mode from the motion compensation (411). The reconstructed chroma samples Cr are processed by the loop filter (413) and then stored in the DPB (415).

With reference to the reconstruction of chroma samples Cr (406), the scaled chroma residual Cres may be defined as follows:

**Equation 4:**
$$Cres = (Sign(Cresscale) * ((Abs(Cresscale) * varScale + (1 << 10)) >> 11)$$

where Sign(x) = 1 for x>0, -1 for x<0, 0 for x=0, and Abs(x) gives the absolute value of x. Cres is finally clipped to stay in the range of the signal.

**Proposed Simplified Inverse Chroma Scaling Factor Function**

As described above, the chroma scaling function requires first determining, for each pixel, a luma value associated with the corresponding pixel to calculate the chroma scaling factor. In order not to delay the chroma calculation, the luma is evaluated using neighboring, already decoded luma values (for example, top and/or left pixels). An average of these values is calculated that provides a luminance value used to determine in which piece this estimated luma value is (to determine i in the inverse chroma scaling factor ChromaInvScaleCoeff[i]). Such a process may be complex for simply determining in which piece the luma value is. Thus, the proposed aspects described below provide, among other things, simplification of determining the inverse chroma scaling factor independent of an average luma calculation. Following determination of the inverse chroma scaling factor, the factor is applied to the image data received from the encoder 200 during decoding of the data. The data is then output, for example, to a display (for example, the display 165).

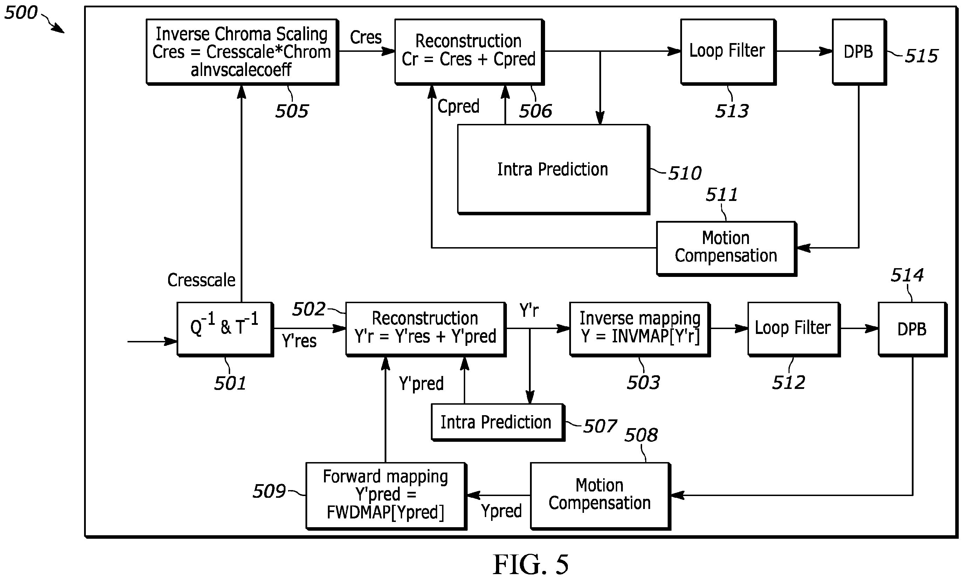

FIG. 5 illustrates a decoding architecture flowchart 500 including the proposed chroma rescaling function in accordance with some implementations. As illustrated, the proposed architecture 500 includes blocks 501 - 503 and blocks 505 - 515, which are functionally similar to blocks 401 - 403 and 405 - 415 of architecture 400 of FIG. 4. As also illustrated, and as described below, the decoding architecture 500 advantageously does not include (or at least need for determining the inverse chroma scaling function (505)) determining identification of the corresponding piece of the estimated current luminance value (calculation (404) of FIG. 4). The aspects described below generally relate to determining the inverse chroma scaling factor based at least on a number of CWs and an offset value.

In some aspects, the inverse chroma scaling factor ChromaInvScaleCoeff[i] is determined based on an original number of CWs per piece (OrgCW) (e.g., without LMCS forward mapping), a number of CWs per piece after LMCS forward mapping (mapCw), and an offset value (chromaOffset) according to the function below:

**Equation 5:**

$$ChromaInvScaleCoeff = \frac{OrgCW * Accur}{mapCW + ChromaOffset}$$

Where Accur is a fixed scaling factor typically equal to (1 << 11) = 2048 (e.g., when 11 bits is the final shift applied in the chroma scaling equation).

In some aspects, the original number of CWs per piece OrgCW, the number of CWs per piece after LMCS forward mapping mapCw, and the offset value chromaOffset are predetermined, fixed values. For example, in some instances the following values may be defined for each of the original number of CWs per piece OrgCW, the number of CWs per piece after LMCS forward mapping mapCw, and the offset value chromaOffset:

OrgCW = 64
mapCW = 73
ChromaOffset = 6.

In such instances, the function for determining the inverse chroma scaling factor ChromaInvScaleCoeff[i] would thus be:

**Equation 6:**

$$ChromaInvScaleCoeff = \frac{64 * 2048}{73 + 6} = \frac{64 * 2048}{79}$$

The above values are given for samples coded with 10 bits (in the range 0 to 1023). For higher bit depth (delta bit depth of D), the values should be left-shifted by D. For instance, 64 should become 64 << D (which, for example, would result in 256 for D=2). For lower bit depth than 10, the shift should be right-shifted by D. For example, 64 should become 64 >> D (which, for example, would result in 8 for D=2).

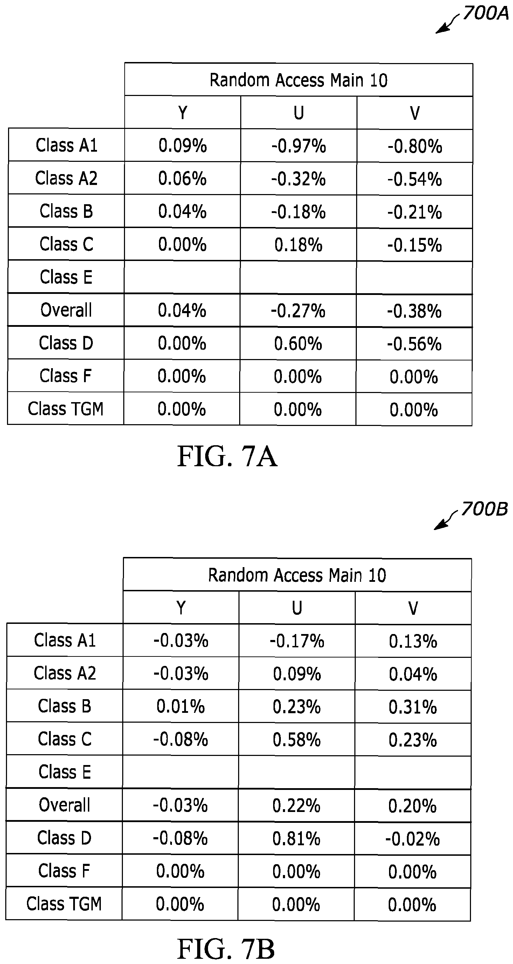

The above configuration was tested compared to the traditional LMCS method using VTM 17.0 code in the Random Access configuration, the results of which are illustrated in table 700A of FIG. 7A. As indicated by table 700A, a small gain in chroma is present at the cost of a small loss in luma.

In some aspects, one or more of the LMCS parameters (the original number of CWs per piece OrgCW, the number of CWs per piece after LMCS forward mapping mapCw, and the offset value chromaOffset) are signaled in the bitstream. They may be signaled in high-level structures including, for example, Sequence Parameter Set (SPS), Picture Parameter Set (PPS), or the slice header. Some of the parameters may also be signaled in lower-level structures including, for example, tiles, sub-pictures, coding tree units (CTUs), coding units (CUs) or transform units (TUs). This is relevant for the parameter chromaOffset, which allows for more fine controlling of the chroma residual scaling. The signaling of the offset value chromaOffset at a low-level may be performed as a delta value (deltaChromaOffset) relative to a value signaled in a high-level structure. A high-level flag may be added to indicate whether the chroma scaling is fixed for the entire structure (e.g., the particular video slice) or variable inside the structure (per CTU). Only a delta value relative to the high level value is sent, for example, to not increase the amount of data to transmit by too much for the low-level.

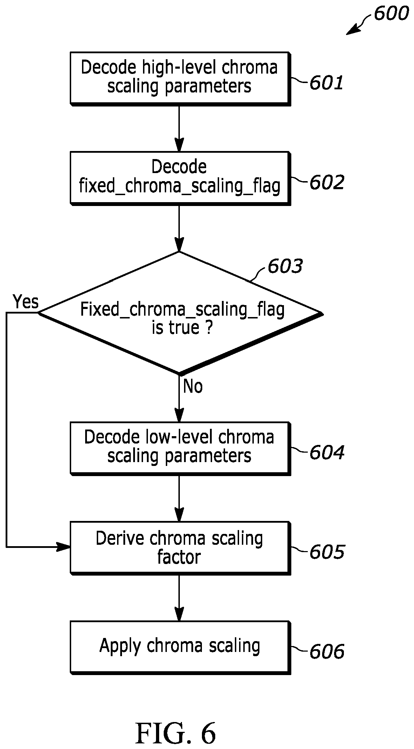

FIG. 6 is a flowchart 600 of the process of chroma scaling parameters parsing. High-level chroma scaling parameters are decoded at block 601. High-level chroma scaling parameters may, for example, correspond to parameters OrgCW, mapCW and chromaOffset, coded in the SPS. In the illustrated example, a flag (fixed_chroma_scaling_flag) is decoded at block 602. When the flag fixed_chroma_scaling_flag is equal to false (check of block 603), low-level chroma scaling parameters are decoded in block 604 (for example, for each CTU of the video slice). This may, for example, correspond to the delta value parameter deltaChromaOffset coded per CTU. The chroma scaling factor is then derived at block 605, after block 604 when the flag fixed_chroma_scaling_flag is equal to false or after block 603 when the flag fixed_chroma_scaling_flag is equal to true. The chroma scaling is then applied at block 606. In instances where the chroma residual is null, the low-level chroma scaling parameters may not need to be coded/decoded.

In some aspects, as previously described above, the inverse chroma scaling factor ChromaInvScaleCoeff[i] is determined with fixed values for one or more parameters. For example, in some aspects the original number of CW per piece OrgCW is set to 64, the number of CW per piece after forward mapping mapCW is set to 73. In such aspects, the offset value chromaOffset is a tunable variable. An example function is provided below:

**Equation 7:**

$$ChromaInvScaleCoeff = \frac{64 * 2048}{73 + ChromaOffset}$$

Different chroma offset values for chromaOffset (for example, 4) may give slightly different results with both gain/loss near 0 in luma and chroma compared to, for example, results describe above with respect to the chromaOffset being set at 6.

In some aspects, the inverse chroma scaling factor is determined based on the total number of codewords. For example, the inverse chroma scaling factor is determined as follows:

**Equation 8:**

$$ChromaInvScaleCoeff$$
$$= \frac{64 * 2048}{Sumbins/(lmcs\_max\_bin\_idx - lmcs\_min\_bin\_idx) + ChromaOffset}$$

where Sumbins is the total number of CWs (e.g., 1022), lmcs_min_bin_idx is the minimum bin index used in the luma mapping, and lmcs_max_bin_idx is the maximum bin index used in the luma mapping. Typically, the difference of the maximum and minimum bin indexes is equal to 14. Again, the chroma scaling factor does not require information from the luma and, thus, the same architecture of FIG. 5 remains applicable for Equation 8 above.

The above function was also tested compared to the previous version of LMCS applied to the VTM 17.0 code. The results in Random Access are illustrated in table 700B of FIG. 7B. The results in the table 700B show a small gain in luma is compensated by a corresponding small loss in chroma.

The following are enumerated methods, devices, non-transitory computer-readable media, and systems with luma mapping and chroma scaling. Example 1: an image decoder comprising: an electronic processor configured to: receive encoded image data; determine, from the encoded image data, a chroma scaling factor independent of a luma average of the encoded image data and based on a number of codewords related to a forward mapping function of the encoded image data and a chroma offset factor; decode the encoded image data according to the chroma scaling factor to create decoded image data; and output the decoded image data.

Example 2: the decoder of Example 1 wherein the number of codewords includes both a number of codewords per piece of the encoded image data before the luma forward mapping and a number of codewords per piece of the encoded image data after the luma forward mapping.

Example 3: the decoder of Example 2, wherein the chroma offset factor is customizable.

Example 4: the decoder of Example 2, wherein at least one selected from the group consisting of the number of codewords per piece before the forward mapping, the number of codewords per piece after forward mapping, and the chroma offset factor is a preset value.

Example 5: the decoder of Example 2, wherein at least one selected from the group consisting of the number of codewords per piece before the forward mapping, the number of codewords per piece after forward mapping, and the chroma offset factor is included in the encoded image data.

Example 6: the decoder of Example 1, wherein the number of codewords is a total number of codewords of the forward mapping function.

Example 7: an image system comprising: an image encoder configured to perform a luma forward mapping function on image data, producing encoded image data; and an image decoder including an electronic processor configured to: receive the encoded image data; determine, from the encoded image data, a chroma scaling factor independent of a luma average of the encoded image data and based on a number of codewords related to the forward mapping function and a chroma offset factor; decode the encoded image data according to the chroma scaling factor; and output the decoded image data.

Example 8: the system of Example 7, wherein the number of codewords includes both a number of codewords per piece of the encoded image data before the luma forward mapping and a number of codewords per piece of the encoded image data after the luma forward mapping.

Example 9: the system of Example 8, wherein the chroma offset factor is customizable.

Example 10: the system of Example 8, wherein at least one selected from the group consisting of the number of codewords per piece before the forward mapping, the number of codewords per piece after forward mapping, and the chroma offset factor is a preset value.

Example 11: the system of Example 8, wherein at least one selected from the group consisting of the number of codewords per piece before the forward mapping, the number of codewords per piece after forward mapping, and the chroma offset factor is included in the encoded image data.

Example 12: the system of Example 7, wherein the number of codewords is a total number of codewords of the forward mapping function.

Example 13: a method of decoding image data, the method comprising: receiving encoded image data; determining, from the encoded image data, a chroma scaling factor independent of a luma average of the encoded image data and based on a number of codewords related to the forward mapping function and a chroma offset factor; decoding the encoded image data according to the chroma scaling factor; and outputting the decoded image data.

Example 14: the method of Example 13, wherein the number of codewords includes both a number of codewords per piece of the encoded image data before the luma forward mapping and a number of codewords per piece of the encoded image data after the luma forward mapping.

Example 15: the method of Example 14, wherein the chroma offset factor is customizable.

Example 16: the method of Example 14, wherein at least one selected from the group consisting of the number of codewords per piece before the forward mapping, the number of codewords per piece after forward mapping, and the chroma offset factor is a preset value.

Example 17: the method of Example 14, wherein at least one selected from the group consisting of the number of codewords per piece before the forward mapping, the number of codewords per piece after forward mapping, and the chroma offset factor is included in the encoded image data.

Example 18: the method of Example 13, wherein the number of codewords is a total number of codewords of the forward mapping function.

Example 19: a non-transitory computer-readable medium comprising instructions that, when executed by an electronic processor, cause the electronic processor to perform a set of operations comprising: receiving encoded image data; determining, from the encoded image data, a chroma scaling factor independent of a luma average of the encoded image data and based on a number of codewords related to the forward mapping function and a chroma offset factor; decoding the encoded image data according to the chroma scaling factor; and outputting the decoded image data.

Example 20: the non-transitory computer-readable medium of Example 18, wherein the number of codewords includes both a number of codewords per piece of the encoded image data before the luma forward mapping and a number of codewords per piece of the encoded image data after the luma forward mapping.

Example 21: the non-transitory computer-readable medium of Example 20, wherein the chroma offset factor is customizable.

Example 22: the non-transitory computer-readable medium of Example 20, wherein at least one selected from the group consisting of the number of codewords per piece before the forward mapping, the number of codewords per piece after forward mapping, and the chroma offset factor is a preset value.

Example 23: the non-transitory computer-readable medium of Example 20, wherein at least one selected from the group consisting of the number of codewords per piece before the forward mapping, the number of codewords per piece after forward mapping, and the chroma offset factor is included in the encoded image data.

Example 24: the non-transitory computer-readable medium of Example 19, wherein the number of codewords is a total number of codewords of the forward mapping function.

In the foregoing specification, specific embodiments, examples, aspects, and features have been described. However, one of ordinary skill in the art appreciates that various modifications and changes can be made without departing from the scope of the subject matter as set forth in the claims below. Accordingly, the specification and figures are to be regarded in an illustrative rather than a restrictive sense, and all such modifications are intended to be included within the scope of present teachings. The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

Moreover, the present aspects are not limited to VVC or HEVC, and can be applied, for example, to other standards and recommendations, and extensions of any such standards and recommendations. Unless indicated otherwise, or technically precluded, the aspects described in this application can be used individually or in combination. Various numeric values are used in the present application. The specific values are for example purposes and the aspects described are not limited to these specific values.

Moreover, relational terms such as first and second, top and bottom, and the like may be used solely to distinguish one entity or action from another entity or action without necessarily requiring or implying any actual such relationship or order between such entities or actions. The terms "comprises," "comprising," "has," "having," "includes," "including," "contains," "containing," or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element proceeded by "comprises ... a," "has ... a," "includes ... a," or "contains ... a" does not, without more constraints, preclude the existence of additional identical elements in the process, method, article, or apparatus that comprises, has, includes, contains the element. Unless the context of their usage unambiguously indicates otherwise, the articles "a," "an," and "the" should not be interpreted as meaning "one" or "only one." Rather these articles should be interpreted as meaning "at least one" or "one or more." Likewise, when the terms "the" or "said" are used to refer to a noun previously introduced by the indefinite article "a" or "an," "the" and "said" mean "at least one" or "one or more" unless the usage unambiguously indicates otherwise.

Also, it should be understood that the illustrated components, unless explicitly described to the contrary, may be combined or divided into separate software, firmware, and/or hardware. For example, instead of being located within and performed by a single electronic processor, logic and processing described herein may be distributed among multiple electronic processors. Similarly, one or more memory modules and communication channels or networks may be used even if examples described or illustrated herein have a single such device or element. Also, regardless of how they are combined or divided, hardware and software components may be located on the same computing device or may be distributed among multiple different devices. Accordingly, in this description and in the claims, if an apparatus, method, or system is claimed, for example, as including a controller, control unit, electronic processor, computing device, logic element, module, memory module, communication channel or network, or other element configured in a certain manner, for example, to perform multiple functions, the claim or claim element should be interpreted as meaning one or more of such elements where any one of the one or more elements is configured as claimed, for example, to make any one or more of the recited multiple functions, such that the one or more elements, as a set, perform the multiple functions collectively.

It will be appreciated that some embodiments, examples, aspects, and features may be comprised of one or more generic or specialized processors (or "processing devices") such as microprocessors, digital signal processors, customized processors and field programmable gate arrays (FPGAs) and unique stored program instructions (including both software and firmware) that control the one or more processors to implement, in conjunction with certain non-processor circuits, some, most, or all of the functions of the method and/or apparatus described herein. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used.

Moreover, one or more of the embodiments, examples, aspects, and features presented herein can be implemented as a computer-readable storage medium having computer readable code stored thereon for programming a computer (e.g., comprising a processor) to perform a method as described and claimed herein. Any suitable computer-usable or computer readable medium may be utilized. Examples of such computer-readable storage mediums include, but are not limited to, a hard disk, a CD-ROM, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory) and a Flash memory. In the context of this document, a computer-usable or computer-readable medium may be any medium that can contain, store, communicate, propagate, or transport the program for use by or in connection with the instruction execution system, apparatus, or device.

Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation. For example, computer program code for carrying out operations of various example examples may be written in an object-oriented programming language such as Java, Smalltalk, C++, Python, or the like. However, the computer program code for carrying out operations of various example embodiments may also be written in conventional procedural programming languages, such as the "C" programming language or similar programming languages. The program code may execute entirely on a computer, partly on the computer, as a stand-alone software package, partly on the computer and partly on a remote computer or server or entirely on the remote computer or server. In the latter scenario, the remote computer or server may be connected to the computer through a local area network (LAN) or a wide area network (WAN), or the connection may be made to an external computer (for example, through the Internet using an Internet Service Provider).

Various implementations involve decoding. "Decoding," as used in this application, may encompass all or part of the processes performed, for example, on a received encoded sequence in order to produce a final output suitable for display. In various examples, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

Also, as used herein, the word "signal" refers to, among other things, indicating something to a corresponding decoder. For example, in certain examples the encoder signals a quantization matrix for de-quantization. In this way, in an example the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various examples. It is to be appreciated that signaling can be accomplished in a variety of ways. For example, one or more syntax elements, flags, and so forth are used to signal information to a corresponding decoder in various examples. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described example. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terms "substantially," "essentially," "approximately," "about," or any other version thereof, are defined as being close to as understood by one of ordinary skill in the art, and in one non-limiting embodiment the term is defined to be within 10%, in another embodiment within 5%, in another embodiment within 1% and in another embodiment within 0.5%. The term "one of," without a more limiting modifier such as "only one of," and when applied herein to two or more subsequently defined options such as "one of A and B" should be construed to mean an existence of any one of the options in the list alone (e.g., A alone or B alone) or any combination of two or more of the options in the list (e.g., A and B together).

A device or structure that is "configured" in a certain way is configured in at least that way, but may also be configured in ways that are not listed.

The terms "coupled," "coupling," or "connected" as used herein can have several different meanings depending on the context in which these terms are used. For example, the terms coupled, coupling, or connected can have a mechanical or electrical connotation. For example, as used herein, the terms coupled, coupling, or connected can indicate that two elements or devices are directly connected to one another or connected to one another through intermediate elements or devices via an electrical element, electrical signal or a mechanical element depending on the particular context.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various examples and embodiments for the purpose of streamlining the disclosure. This method of disclosure is not to be interpreted as reflecting an intention that the claimed subject matter requires more features than are expressly recited in each claim. Rather, as the following claims reflect, inventive subject matter lies in less than all features of a single disclosed example. Thus, the following claims are hereby incorporated into the Detailed Description, with each claim standing on its own as a separately claimed subject matter.

Thus, the present disclosure provides, among other things, a simplified chroma scaling function. Various features and advantages of the invention are set forth in the following claims.

**Claims**

1. An image decoder comprising:
   an electronic processor configured to:

   receive encoded image data;
   determine, from the encoded image data, a chroma scaling factor independent of a luma average of the encoded image data and based on a number of codewords related to a forward mapping function of the encoded image data and a chroma offset factor;
   decode the encoded image data according to the chroma scaling factor to create decoded image data; and
   output the decoded image data.

2. The decoder of claim 1, wherein the number of codewords includes both a number of codewords per piece of the encoded image data before the luma forward mapping and a number of codewords per piece of the encoded image data after the luma forward mapping.

3. The decoder of claim 2, wherein the chroma offset factor is customizable.

4. The decoder of claim 2, wherein at least one selected from the group consisting of the number of codewords per piece before the forward mapping, the number of codewords per piece after forward mapping, and the chroma offset factor is a preset value.

5. The decoder of claim 2, wherein at least one selected from the group consisting of the number of codewords per piece before the forward mapping, the number of codewords per piece after forward mapping, and the chroma offset factor is included in the encoded image data.

6. The decoder of claim 1, wherein the number of codewords is a total number of codewords of the forward mapping function.

7. An image system comprising:

   an image encoder configured to perform a luma forward mapping function on image data, producing encoded image data; and
   an image decoder including an electronic processor configured to:

   receive the encoded image data;
   determine, from the encoded image data, a chroma scaling factor independent of a luma average of the encoded image data and based on a number of codewords related to the forward mapping function and a chroma offset factor;
   decode the encoded image data according to the chroma scaling factor; and
   output the decoded image data.

8. The system of claim 7, wherein the number of codewords includes both a number of codewords per piece of the encoded image data before the luma forward mapping and a number of codewords per piece of the encoded image data after the luma forward mapping.

9. The system of claim 8, wherein the chroma offset factor is customizable.

10. The system of claim 8, wherein at least one selected from the group consisting of the number of codewords per piece before the forward mapping, the number of codewords per piece after forward mapping, and the chroma offset factor is a preset value.

11. The system of claim 8, wherein at least one selected from the group consisting of the number of codewords per piece before the forward mapping, the number of codewords per piece after forward mapping, and the chroma offset factor is included in the encoded image data.

12. The system of claim 7, wherein the number of codewords is a total number of codewords of the forward mapping function.

FIG. 1

EP 4 686 197 A1

FIG. 2

FIG. 3

EP 4 686 197 A1

Prior Art

FIG. 4

**FIG. 5**

600

```
┌─────────────────────────┐
│  Decode high-level chroma │──601
│    scaling parameters     │
└─────────────────────────┘
             │
             ▼
┌─────────────────────────┐
│        Decode            │──602
│ fixed_chroma_scaling_flag│
└─────────────────────────┘
             │
             ▼
          ◇ 603
    Fixed_chroma_scaling_flag
           is true ?
   Yes ◄──── ◇ ────► No
```

Yes

Fixed_chroma_scaling_flag
is true ?

603

No

┌─────────────────────────┐
│  Decode low-level chroma  │──604
│    scaling parameters     │
└─────────────────────────┘

┌─────────────────────────┐
│  Derive chroma scaling    │──605
│        factor             │
└─────────────────────────┘

┌─────────────────────────┐
│   Apply chroma scaling    │──606
└─────────────────────────┘

FIG. 6

/700A

| | Random Access Main 10 | | |
|---|---|---|---|
| | Y | U | V |
| Class A1 | 0.09% | -0.97% | -0.80% |
| Class A2 | 0.06% | -0.32% | -0.54% |
| Class B | 0.04% | -0.18% | -0.21% |
| Class C | 0.00% | 0.18% | -0.15% |
| Class E | | | |
| Overall | 0.04% | -0.27% | -0.38% |
| Class D | 0.00% | 0.60% | -0.56% |
| Class F | 0.00% | 0.00% | 0.00% |
| Class TGM | 0.00% | 0.00% | 0.00% |

## FIG. 7A

/700B

| | Random Access Main 10 | | |
|---|---|---|---|
| | Y | U | V |
| Class A1 | -0.03% | -0.17% | 0.13% |
| Class A2 | -0.03% | 0.09% | 0.04% |
| Class B | 0.01% | 0.23% | 0.31% |
| Class C | -0.08% | 0.58% | 0.23% |
| Class E | | | |
| Overall | -0.03% | 0.22% | 0.20% |
| Class D | -0.08% | 0.81% | -0.02% |
| Class F | 0.00% | 0.00% | 0.00% |
| Class TGM | 0.00% | 0.00% | 0.00% |

## FIG. 7B

Europäisches
Patentamt
European
Patent Office
Office européen
des brevets

# EUROPEAN SEARCH REPORT

**Application Number**

EP 24 30 6226

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHAO (LGE) J ET AL: "CE2-related: No-latency LMCS Chroma Residual Scaling for Single tree and Dual tree", 15. JVET MEETING; 20190703 - 20190712; GOTHENBURG; (THE JOINT VIDEO EXPLORATION TEAM OF ISO/IEC JTC1/SC29/WG11 AND ITU-T SG.16 ), , no. JVET-O0232 ; m48342 2 July 2019 (2019-07-02), pages 1-9, XP030218924, Retrieved from the Internet: URL:http://phenix.int-evry.fr/jvet/doc_end _user/documents/15_Gothenburg/wg11/JVET-O0 232-v2.zip JVET-O0232_r1.docx [retrieved on 2019-07-02] * abstract * * figure 2 * * table 1 * * sections 2 and 3 * ----- | 1-12 | INV.<br>H04N19/117<br>H04N19/136<br>H04N19/186<br>H04N19/70 |
| A | CHEN J ET AL: "Non-CE2: unification of chroma residual scaling design", 15. JVET MEETING; 20190703 - 20190712; GOTHENBURG; (THE JOINT VIDEO EXPLORATION TEAM OF ISO/IEC JTC1/SC29/WG11 AND ITU-T SG.16 ), , no. JVET-O1109 7 July 2019 (2019-07-07), XP030293809, Retrieved from the Internet: URL:https://jvet-experts.org/doc_end_user/ documents/15_Gothenburg/wg11/JVET-O1109-v2 .zip JVET-O1109r1.docx [retrieved on 2019-07-07] * section 2 * ----- | 1-12 | TECHNICAL FIELDS SEARCHED (IPC)<br><br>H04N |

The present search report has been drawn up for all claims

| Place of search | Date of completion of the search | Examiner |
|---|---|---|
| The Hague | 8 January 2025 | Wedi, Thomas |

EPO FORM 1503 03.82 (P04C01)